# EUROPÄISCHE PATENTSCHRIFT

(11) **EP 3 802 234 B1**
(45) Veröffentlichungstag und Bekanntmachung des Hinweises auf die Patenterteilung: **11.01.2023**
(21) Anmeldenummer: 19723747.2
(22) Anmeldetag: 07.05.2019
(51) Int. Cl.: B60R 25/24, G07C 9/00

(54) **VERFAHREN UND STEUERVORRICHTUNG ZUM BETREIBEN EINER SENDEANLAGE EINES FUNKSCHLÜSSELSYSTEMS EINES KRAFTFAHRZEUGS SOWIE KRAFTFAHRZEUG MIT EINER SOLCHEN SENDEANLAGE**
METHOD AND CONTROL DEVICE FOR OPERATING A TRANSMITTER UNIT OF A WIRELESS KEY SYSTEM OF A MOTOR VEHICLE, AND MOTOR VEHICLE HAVING SUCH A TRANSMITTER UNIT
PROCÉDÉ ET DISPOSITIF DE COMMANDE POUR FAIRE FONCTIONNER UN ÉMETTEUR D'UN SYSTÈME DE CLÉS PAR RADIO D'UN VÉHICULE AUTOMOBILE ET VÉHICULE AUTOMOBILE AYANT UN TEL ÉMETTEUR

(30) Priorität: 06.06.2018 DE 102018208884
(43) Veröffentlichungstag der Anmeldung: 14.04.2021
(73) Patentinhaber: Continental Automotive Technologies GmbH, 30165 Hannover (DE); Bayerische Motoren Werke Aktiengesellschaft, 80809 München (DE)
(72) Erfinder: REISINGER, Thomas, 93128 Regenstauf (DE); KREBS, Alexander, 80636 München (DE)
(74) Vertreter: Hofstetter, Schurack & Partner
(86) Internationale Anmeldenummer: PCT/EP2019/061682
(87) Internationale Veröffentlichungsnummer: WO 2019/233691

(56) Entgegenhaltungen:
- WO-A1-2018/137923
- DE-A1- 10 202 282
- DE-A1-102016 002 302

## Beschreibung

Die Erfindung betrifft ein Verfahren zum Betreiben einer Sendeanlage eines Funkschlüsselsystems eines Kraftfahrzeugs. Die Sendeanlage weist mehrere Sendeeinheiten auf, die hier als Ankertransmitter bezeichnet sind und die nacheinander eine jeweilige Ankernachricht zu einer Funkschlüsseleinheit aussenden können, wodurch auf Grundlage einer Laufzeitmessung ein jeweiliger Abstand der Funkschlüsseleinheit zu den einzelnen Ankertransmittern ermittelt werden kann. Hierdurch kann überprüft, ob sich die Funkschlüsseleinheit in einem vorbestimmten Bereich um das Kraftfahrzeug herum befindet. Zu der Erfindung gehört auch eine Steuervorrichtung für die fahrzeugseitige Sendeanlage des Funkschlüsselsystems. Schließlich umfasst die Erfindung auch ein Kraftfahrzeug mit einer solchen Sendeanlage.

Bei einem Kraftfahrzeug kann vorgesehen sein, dass dessen Schließanlage für Türen und/oder eine Wegfahrsperre ohne die Verwendung eines mechanischen Schlüssels für ein mechanisches Schloss stattdessen auf der Grundlage einer Funkschlüsseleinheit entriegelt werden kann. Eine solche Funkschlüsseleinheit kann mit einer fahrzeugseitigen Sendeanlage des Funkschlüsselsystems vorbestimmte Funksignale austauschen, durch welche der Träger oder Besitzer der Funkschlüsseleinheit authentifiziert wird und daraufhin durch das Funkschlüsselsystem ein Freigabesignal zum Entriegeln der Türschlösser und/oder der Wegfahrsperre erzeugt wird.

Für den beschriebenen funkbasierten Schließvorgang möchte man zusätzlich verifizieren können, dass sich die Funkschlüsseleinheit in einem vorbestimmten Bereich um das Kraftfahrzeug herum befindet. Es soll dadurch verhindert werden, dass die Funkschlüsseleinheit den Schließvorgang auch dann auslösen kann, wenn sich die Funkschlüsseleinheit derart weit vom Kraftfahrzeug entfernt befindet, dass ein Benutzer oder Besitzer der Funkschlüsseleinheit nicht erkennen kann, wer zwischenzeitlich das Kraftfahrzeug öffnet.

Für diese Abstandsverifikation kann vorgesehen sein, dass die Funkschlüsseleinheit eine Abstandsmessung mittels einer Pollingnachricht auslöst und daraufhin einzelne Sendeeinheiten der fahrzeugseitigen Sendeanlage jeweils eine Ankernachricht an die Funkschlüsseleinheit aussenden. Die Ankernachricht wird so bezeichnet, weil die einzelnen Sendeeinheiten einer fahrzeugseitigen Sendeanlage als Ankertransmitter bezeichnet werden. Die Funkschlüsseleinheit kann die Zeit messen, die zwischen dem Aussenden ihrer Pollingnachricht und dem Empfangen der einzelnen Ankernachrichten vergeht. In einer abschließenden Finalnachricht kann die Funkschlüsseleinheit die gemessenen Zeitabstände einer Steuervorrichtung der Sendeanlage des Kraftfahrzeugs mitteilen. Genauso kann durch diese Steuervorrichtung auch der zeitliche Abstand zwischen dem Aussenden der einzelnen Ankernachrichten einerseits und dem Empfangen der Finalnachricht andererseits gemessen werden.

Da also Zeitmessungen sowohl auf der Seite der Funkschlüsseleinheit als auch auf der Fahrzeugseite durchgeführt werden, wird dieses Verfahren als DS-TWR (Double Sided Two Way Ranging) bezeichnet.

Da die jeweiligen Verarbeitungszeiten in der Funkschlüsseleinheit und in der Sendeanlage des Kraftfahrzeugs bekannt sind, kann auf die reine Übertragungszeit oder Laufzeit (Time of Flight) der einzelnen Nachrichten rückgeschlossen werden. Daraus kann somit bei Kenntnis der Ausbreitungsgeschwindigkeit der Funknachrichten (Pollingnachricht, Ankernachricht, Finalnachricht) auf den Abstand zwischen Funkschlüsseleinheit einerseits und dem jeweiligen Ankertransmitter andererseits geschlossen werden. Die Funknachrichten können mittels UWB (Ultra Wideband) mit einer Frequenz von mehr als 100 Kilohertz übertragen werden. Die Ausbreitungsgeschwindigkeit ist hier die Lichtgeschwindigkeit.

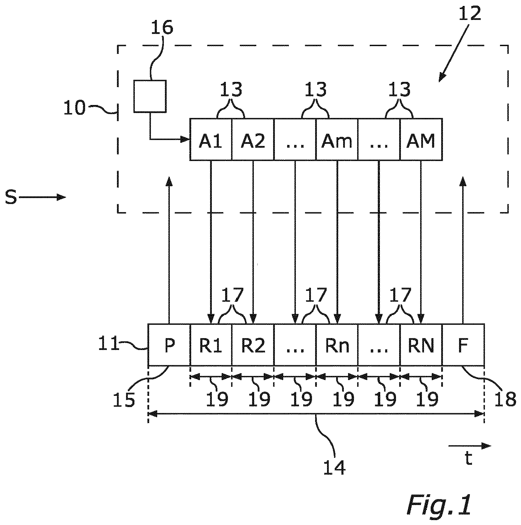

Fig. 1 veranschaulicht noch einmal einen solchen Schließvorgang S. Dargestellt sind ein Kraftfahrzeug 10 und eine Funkschlüsseleinheit 11. In dem Kraftfahrzeug 10 kann eine Sendeanlage 12 vorgesehen sein, die mehrere Ankertransmitter 13 aufweisen kann. Die Ankertransmitter 13 sind durch ihre Bezeichnung A1, A2, ..., An, ..., AN unterschieden, wobei N die Gesamtanzahl der Ankertransmitter 13 der Sendeanlage 12 ist. Für die beschriebene Abstandsmessung kann nun zumindest ein Ranging-Cycle oder Messzyklus 14 durchgeführt werden. Die Funkschlüsseleinheit 11 kann die Abstandsmessung mit einer Pollingnachricht 15 (P) auslösen, die im Kraftfahrzeug 10 empfangen werden kann. Es kann hierfür ein Empfänger in dem Kraftfahrzeug 10 bereitgestellt sein. Mittels der Ankertransmitter 13 kann nun eine Steuervorrichtung 16 der Sendeanlage 12 als Antwort einzelne Ankernachrichten 17 an die Funkschlüsseleinheit 11 aussenden. Die Ankertransmitter 13 sind an unterschiedlichen Positionen im Kraftfahrzeug 10 angeordnet. Somit ergeben sich unterschiedliche Laufzeiten für die Ankernachrichten 17 bei ihrer Übertragung durch die Luft von dem jeweiligen Ankertransmitter 13 zu der Funkschlüsseleinheit 11. Die Ankernachrichten 17 sind in Fig. 1 durch individuelle Bezeichnungen R1, R2, ..., Rn, ..., RN unterschieden, wobei N die Gesamtanzahl der ausgesendeten Ankernachrichten 17 ist. Die Ankernachrichten 17 werden zeitlich nacheinander ausgesendet. Für das Aussenden der jeweiligen Ankernachricht 17 steht hierzu ein jeweiliger Time-Slot oder Zeitschlitz 19 zur Verfügung. Die Funkschlüsseleinheit 11 kann nun die gemessenen Zeitabstände, die zwischen dem Aussenden der Pollingnachricht 15 und dem Empfang der jeweiligen Ankernachricht 17 in einer Finalnachricht 18 (F) an das Kraftfahrzeug 10 aussenden. In dem Kraftfahrzeug 10 kann in der beschriebenen Weise ebenfalls der jeweilige zeitliche Abstand zwischen dem Aussenden der jeweiligen Ankernachricht 17 und dem Empfang der Finalnachricht 18 gemessen werden.

Es gibt Versuche, diesen Ablauf des DS-TWR, wie er in Fig. 1 dargestellt ist, zu manipulieren, um sich unautorisierten Zutritt zu einem Kraftfahrzeug zu verschaffen und/oder die Wegfahrsperre des Kraftfahrzeugs ohne Autorisierung zu überwinden.

Aus der DE 10 2016 002 302 A1 ist ein Verfahren nach dem Oberbegriff des Anspruch 1 bekannt.

Der Erfindung liegt die Aufgabe zugrunde, das beschriebene DS-TWR gegen einen Manipulationsversuch abzusichern.

Durch die Erfindung ist ein Verfahren zum Betreiben einer Sendeanlage eines Funkschlüsselsystems eines Kraftfahrzeugs bereitgestellt. Eine Steuervorrichtung der Sendeanlage sieht in der beschriebenen Weise vor, dass für einen jeweiligen Schließvorgang in zumindest einem Messzyklus oder Ranging-Cycle jeweils in Reaktion auf eine Pollingnachricht in mehreren aufeinanderfolgenden Zeitschlitzen oder Zeitfenstern jeweils einer von mehreren Ankertransmittern der Sendeanlage eine Ankernachricht aussendet. Als Ankernachricht kann jeweils ein Funksignal ausgesendet werden, wie es an sich aus dem Stand der Technik im Zusammenhang mit der Methode des DS-TWR bekannt ist. Auch die Pollingnachricht und die Finalnachricht können in an sich aus dem Stand der Technik bekannter Weise ausgestaltet sein. Der Messzyklus wird durch Empfangen einer Finalnachricht beendet, welche der Ankernachrichten die von einer Funkschlüsseleinheit gemessenen Empfangszeiten signalisiert. Die Empfangszeiten können absolut oder aber relativ beispielsweise bezüglich des Sendezeitpunkts der Pollingnachricht gemessen sein. Der Schließvorgang kann das Entriegeln und/oder Verriegeln einer Schließanlage des Kraftfahrzeugs und/oder einer Wegfahrsperre des Kraftfahrzeugs betreffen. Jeder Ankertransmitter kann an einem anderen Ort des Kraftfahrzeugs angeordnet sein. Es können N Ankertransmitter vorgesehen sein, wobei die Gesamtanzahl z.B. in einem Bereich von 2 bis 12 liegen kann.

Die bisher beschriebenen Verfahrensschritte entsprechen dem eingangs beschriebenen Schließvorgang, wie er an sich bekannt ist. Um nun aber diesen Schließvorgang gegen einen Manipulationsversuch abzusichern, ist erfindungsgemäß vorgesehen, dass zum Ermitteln einer Sendereihenfolge der Ankertransmitter mittels einer Zuordnungsvorschrift oder eines sogenannten Mapping eine Zuordnung der Ankertransmitter zu den Zeitschlitzen durchgeführt wird. Mit anderen Worten ist mittels der Zuordnungsvorschrift sichergestellt, dass die Ankertransmitter nicht für jeden Messzyklus in derselben Sendereihenfolge nacheinander ihre jeweilige Ankernachricht aussenden. Anders als in Fig. 1 dargestellt ist also für einen Beobachter nicht klar, welche der Ankertransmitter im ersten Zeitschlitz eine Ankernachrichten aussenden wird und welcher weitere Ankertransmitter dann im zweiten Zeitschlitz danach seine Ankernachricht aussenden wird und so weiter. Die Zuordnungsvorschrift sieht vor, dass die Zuordnung von Ankertransmitter zu Zeitschlitz zeitlich veränderlich erfolgt. In zwei nacheinander durchgeführten Messzyklen kann sich also eine andere Sendereihenfolge ergeben, sodass das Beobachten eines Messzyklus keinen Rückschluss auf die Sendereihenfolge im nächsten Messzyklus zulässt.

Durch die Erfindung ergibt sich der Vorteil, dass sich für einen Schließvorgang eines Funkschlüsselsystems eines Kraftfahrzeugs keine Angriffsstrategie auf der Grundlage einer vorbekannten Sendereihenfolge der Ankertransmitter entwickeln lässt. Die Ankertransmitter ändern ihre Sendereihenfolge auf der Grundlage einer Zuordnungsvorschrift, die vorsieht, dass die Zuordnung von Ankertransmittern zu Zeitschlitzen zeitlich veränderlich erfolgt, also von Messzyklus zu Messzyklus variiert. Die Reihenfolge kann also von Messzyklus zu Messzyklus verändert werden.

Die Funkschlüsseleinheit kann im Zusammenhang mit der Erfindung als ein separater Transceiver ausgestaltet sein oder als ein Bestandteil beispielsweise eines Smartphones oder eines Tablet-PCs oder einer Smartwatch bereitgestellt sein. Die Ausgestaltung der Funkschlüsseleinheit ist frei wählbar.

Die Erfindung umfasst auch Ausführungsformen, durch die sich zusätzliche Vorteile ergeben.

Die besagte Zuordnungsvorschrift kann beispielsweise als ein Programmcode oder als eine Tabelle realisiert sein.

In einer Ausführungsform sieht die Zuordnungsvorschrift vor, dass die Zuordnung für zumindest einige aufeinanderfolgende Messzyklen gemäß einem vorbestimmten Permutationsmuster erfolgt. Mit anderen Worten ist die Veränderung der Sendereihenfolge, wie sie für die einzelnen Messzyklen vorgenommen wird, deterministisch und durch das Permutationsmuster festgelegt. Der Permutationsmuster kann beispielsweise vorsehen, dass für die Sendereihenfolge die Ankertransmitter zyklisch durchrotiert werden. Ein vorbestimmtes Permutationsmuster weist den Vorteil auf, dass das Sendeverhalten des Funkschlüsselsystems weiterhin deterministisch bleibt. Dennoch ist das Sendeverhalten der Sendeanlage von außerhalb für einen Beobachter nur mit großem Aufwand ermittelbar.

Eine Ausführungsform sieht vor, dass die Zuordnungsvorschrift vorsieht, dass die Zuordnung für zumindest einige aufeinanderfolgende Messzyklen mittels einer kryptographischen Funktion pseudo-zufällig erfolgt. Als kryptographische Funktion kann beispielsweise eine Hash-Funktion oder Prüfsummenfunktion zugrundegelegt werden. Als Eingangsparameter der kryptographischen Funktion kann beispielsweise eine Ordnungsnummer des aktuellen Messzyklus verwendet werden. Eine kryptographische Funktion bildet einen Eingangsparameter auf einem Ausgangsparameter ab, dessen Wert allerdings pseudo-zufällig ist. Mit "pseudo-zufällig" ist dabei gemeint, dass weiterhin deterministische Rechenvorgänge zugrundegelegt sind und keine statistischen Vorgänge wie beispielsweise thermisches Rauschen. Die Verwendung einer kryptographischen Funktion weist den Vorteil auf, dass unabhängig von einer Anzahl an beobachteten Messzyklen stets für einen zukünftigen Messzyklus eine Vorhersage der Zuordnung oder Sendereihenfolge für einen außenstehenden Beobachter unmöglich ist, solange er die kryptographische Funktion und die aktuellen Eingangsparameter nicht kennt.

Eine Ausführungsform sieht vor, dass die jeweils gewählte Zuordnung, also die für einen jeweiligen Messzyklus ermittelte Sendereihenfolge, vor der Funkschlüsseleinheit geheim gehalten wird. Die Funkschlüsseleinheit kennt also nicht die Sendereihenfolge der Ankertransmitter. Dies ist auch nicht nötig, da die Funkschlüsseleinheit lediglich Empfangszeiten von der Ankernachrichten messen muss, ohne zu wissen, von welchem Ankertransmitter die jeweilige Ankernachricht ausgesendet wurde. Die Steuervorrichtung ordnet die durch die Finalnachricht signalisierten Empfangszeiten jeweils dem zugehörigen Ankertransmitter zu. Mit anderen Worten nutzt die Steuervorrichtung die ihr bekannte Sendereihenfolge, um die Empfangszeiten den einzelnen Ankertransmittern zuzuordnen. Das Geheimhalten der gewählten Zuordnung weist den Vorteil auf, dass die Kenntnis über die verwendete Sendereihenfolge nicht nach außen außerhalb des Kraftfahrzeugs signalisiert werden muss.

Eine Ausführungsform sieht vor, dass für den Schließvorgang eine vorbestimmte Trainingssequenz und/oder ein Sitzungsschlüssel zum Absichern einer Funkkommunikation mit der Funkschlüsseleinheit ausgetauscht wird. Die Trainingssequenz ist an sich aus dem Stand der Technik bekannt und wird auch als STS (Secure Training Sequenz) bezeichnet. Auch Sitzungsschlüssel sind Stand der Technik. Es wird nun aber die Zuordnung der Ankertransmitter zu den Zeitschlitzen, d.h. die Sendereihenfolge, mittels einer vorbestimmten Funktion in Abhängigkeit von der Trainingssequenz und/oder der Sitzungsschlüssels festgelegt. Mit anderen Worten wird die Trainingssequenz und/oder der Sitzungsschlüssel verwendet, um daraus gemäß einer bekannten oder vorgegebenen Funktion die Zuordnung oder Sendereihenfolge abzuleiten. Die Trainingssequenz und/oder der Sitzungsschlüssel selbst stellt dann also einen pseudo-zufälligen Eingangsparameter für die Funktion dar. Die Verwendung einer vorbestimmten Trainingssequenz und/oder eines Sitzungsschlüssels vereinfacht die Implementierung der Zuordnungsvorschrift. Die Funktion zum Festlegen der Zuordnung oder Sendereihenfolge kann z.B. die besagte kryptographische Funktion sein, also z.B. eine Hash-Funktion.

Eine Ausführungsform sieht vor, dass für einen Schließvorgang mehrere Messzyklen nacheinander durchgeführt werden und die Messzyklen durch einen Zählerindex voneinander unterschieden werden. Durch die Verwendung mehrerer Messzyklen kann die Abstandsmessung verifiziert und/oder plausibilisiert werden. Jeder Messzyklus kann dabei eine Ordnungsnummer erhalten (zum Beispiel erster Messzyklus, zweiter Messzyklus), sodass sich hierdurch ein Zählerindex r oder eben die Ordnungsnummer ergibt. Die für den jeweiligen Messzyklus durchgeführte Zuordnung von Ankertransmitter zu Zeitschlitz, also die sich ergebende Sendereihenfolge, wird in Abhängigkeit von dem jeweils aktuellen Zählerindex r festgelegt. Durch Verändern oder Inkrementieren des Zählerindex wird also auch die Zuordnung verändert. Hierdurch ergibt sich der Vorteil, dass sichergestellt ist, dass während eines Schließvorgangs mit mehreren Messzyklen für jeden Messzyklus eine andere Sendereihenfolge gewährleistet ist.

Eine Ausführungsform sieht vor, dass die für zumindest einen oder einige Messzyklen durchgeführte Zuordnung in Abhängigkeit von einem Zeitsignal einer Zeitgebereinheit festgelegt wird. Mit anderen Worten kann eine absolute Uhrzeit und/oder eine relative Zeitangabe zugrundegelegt werden, um die Sendereihenfolge zu bestimmen oder festzulegen. Als Zeitgebereinheit kann beispielsweise eine elektronische Uhr oder ein Schwingquarz oder ein elektronisches Zählwerk verwendet werden. Alternativ kann auch ein sich mit jeder einzelnen Laufzeitmessung oder mit jedem Messzyklus erhöhender Zählerstand dienen. Das Festlegen der Zuordnung in Abhängigkeit von einem Zeitsignal oder einem Zählerstand weist den Vorteil auf, dass die Sendereihenfolge in Abhängigkeit von der Tageszeit und/oder einer Betriebsdauer des Kraftfahrzeugs festgelegt werden kann.

Eine Ausführungsform sieht vor, dass in zumindest einigen Messzyklen eine Anzahl M der Zeitschlitze größer oder gleich oder kleiner als die Anzahl N der Ankertransmitter ist. Falls dabei eine größere Anzahl an Zeitschlitzen als Ankertransmitter vorgesehen sind (N>M), kann beispielsweise in einem Zeitschlitz eine Sendepause vorgesehen sein oder ein Ankertransmitter kann ein weiteres Mal im selben Messzyklus seine Ankernachricht nochmals aussenden. Falls weniger Zeitschlitze als Ankertransmitter vorgesehen sind (N<M), kann für jeden Messzyklus aus den Ankertransmittern eine Teilgruppe für das Senden der Ankernachrichten ausgewählt werden. Es ist dann also nicht jeder Ankertransmitter in jedem Messzyklus aktiv. Falls die Anzahl der Zeitschlitze gleich der Anzahl der Ankertransmitter ist (N=M), ist jeder Ankertransmitter für die Abstandsmessung nutzbar. Es kann aber auch vorgesehen sein, dass selbst bei gleicher Anzahl dennoch beispielsweise ein Ankertransmitter mehrfach eine Ankernachricht aussendet, während ein anderer Ankertransmitter keine Ankernachricht aussendet.

Bei einer Ausführungsform sieht die Zuordnungsvorschrift für zumindest einen Zeitschlitz vor, dass zwei Ankertransmitter innerhalb des Zeitschlitzes ihre jeweilige Ankernachricht aussenden. Mit anderen Worten überschneiden sich die Sendezeiten zweier Ankertransmitter. Hierdurch ergibt sich der Vorteil, dass für einen unvorbereiteten Beobachter ein nur schwer zu interpretierendes Funksignal entsteht.

Eine Ausführungsform sieht vor, dass die Zuordnungsvorschrift für zumindest einen Messzyklus vorsieht, dass zumindest ein Ankertransmitter seine jeweilige Ankernachricht in zumindest zwei unterschiedlichen Zeitschlitzen des Messzyklus aussendet. Hierdurch ergibt sich eine Erhöhung der Verfügbarkeit und/oder Genauigkeit der Abstandsmessung zu diesem Ankertransmitter.

Eine Ausführungsform sieht vor, dass für zumindest einen Messzyklus durch die Zuordnungsvorschrift vorgesehen ist, dass nur einige der Ankertransmitter, also nicht alle Ankertransmitter, ihre jeweilige Ankernachricht aussenden. Hierdurch ergibt sich der Vorteil, dass auch die Anzahl der am Messzyklus beteiligten Ankertransmitter und/oder die Gruppe der beteiligten Ankertransmitter variiert werden kann.

Eine Ausführungsform sieht vor, dass für zumindest einen Schließvorgang vorgesehen ist, dass mehrere Messzyklen durchgeführt werden und aus der Finalnachricht jedes Messzyklus ein jeweiliger Abstandswert eines Abstands der Funkschlüsseleinheit zu jedem der Ankertransmitter ermittelt wird und dann aber das besagte Freigabesignal für den Schließvorgang nur erzeugt wird, wenn die Abstandswerte der mehreren Messzyklen ein vorbestimmtes Plausibilitätskriterium erfüllen. Es erfolgt also ein Trade-off oder ein Abwägung zwischen Dauer des Schließvorgangs (je mehr Messzyklen, desto länger) und der Sicherheit (Plausibilisierung eines ermittelten Abstandswerts über mehrere Messzyklen hinweg). Das Plausibilitätskriterium kann beispielsweise besagen, dass eine vorbestimmte Mindestanzahl an ermittelten Abstandswerten eines Abstands zwischen der Funkschlüsseleinheit einerseits und einem jeweiligen Ankertransmitter andererseits kleiner als ein vorbestimmter Höchstwert sein muss, damit das Freigabesignal erzeugt wird. Das Freigabesignal gibt an, dass der Schließvorgang durchgeführt werden soll.

Um das erfindungsgemäße Verfahren durchzuführen, ist durch die Erfindung auch eine Steuervorrichtung für eine fahrzeugseitige Sendeanlage eines Funkschlüsselsystems für ein Kraftfahrzeug bereitgestellt. Die Steuervorrichtung weist eine Recheneinrichtung auf, die dazu eingerichtet ist, eine Ausführungsform des erfindungsgemäßen Verfahrens durchzuführen. Die Recheneinrichtung kann auf der Grundlage zumindest eines Mikroprozessors und/oder zumindest eines Mikrocontrollers realisiert sein. Die Verfahrensschritte des Verfahrens können auf der Grundlage eines Programmcodes realisiert sein, der bei Ausführen durch die Recheneinrichtung die Ausführungsform des erfindungsgemäßen Verfahrens durchführt. Der Programmcode kann in einem Datenspeicher der Recheneinrichtung gespeichert sein.

Zu der Erfindung gehört schließlich auch ein Kraftfahrzeug mit einer Sendeanlage eines Funkschlüsselsystems, wobei Ankertransmitter der Sendeanlage mit einer Steuervorrichtung gekoppelt sind, die eine Ausführungsform der erfindungsgemäßen Steuervorrichtung darstellt. Als Ankertransmitter kann jeweils beispielsweise ein Funksender vorgesehen sein. Die Ankertransmitter können an unterschiedlichen Einbauorten im Kraftfahrzeug bereitgestellt sein. Die Ankertransmitter sind insbesondere dazu ausgestaltet, ein UWB-Funksignal zu erzeugen. Eine Sendefrequenz ist bevorzugt größer als 100 Kilohertz, insbesondere größer als 1 Megahertz. Eine Bandbreite beträgt bevorzugt mehr als 500 MHz und/oder mehr als 0,2 fraktionale Bandbreite (fractional bandwidh, Bandbreite geteilt durch Mittenfrequenz).

Das erfindungsgemäße Kraftfahrzeug kann als Kraftwagen, insbesondere als Personenkraftwagen oder Lastkraftwagen, ausgestaltet sein.

Die Erfindung umfasst auch die Kombinationen der Merkmale der beschriebenen Ausführungsformen.

Im Folgenden ist ein Ausführungsbeispiel der Erfindung beschrieben. Hierzu zeigt:
- Fig. 1: eine Skizze zur Veranschaulichung des Stands der Technik;
- Fig. 2: eine schematische Darstellung einer Ausführungsform des erfindungsgemäßen Kraftfahrzeugs und eine Darstellung einer Funkschlüsseleinheit;
- Fig. 3: eine Skizze zur Veranschaulichung einer zeitlich veränderlichen Zuordnung, wie sie durch eine Zuordnungsvorschrift einer Steuervorrichtung im Kraftfahrzeug realisiert werden kann;
- Fig. 4: eine Skizze zur Veranschaulichung eines Kollisionsproblems, wie es durch die Erfindung verhindert werden;
- Fig. 5: ein Flussschaudiagramm zur Veranschaulichung der Verwendung eines Sitzungsschlüssels und einer kryptographischen Funktion beim Festlegen einer Zuordnung von Ankertransmittern zu Zeitschlitzen für einen Messzyklus eines Schließvorgangs, wie es gemäß einer Ausführungsform des erfindungsgemäßen Verfahrens vorgesehen sein kann.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

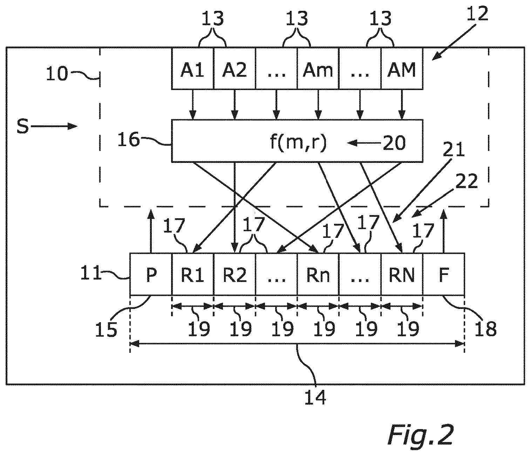

Fig. 2 zeigt in derselben Darstellungsweise wie Fig. 1 ein Kraftfahrzeug 10 und eine Funkschlüsseleinheit 11. In dem Kraftfahrzeug 10 kann wie auch beim Stand der Technik vorgesehen eine Sendeanlage 12 für ein Funkschlüsselsystem bereitgestellt sein, welches einen Benutzer der Funkschlüsseleinheit 11 ermöglicht, von außerhalb des Kraftfahrzeugs 10 mittels der Funkschlüsseleinheit 11 einen Schließvorgang S zu steuern oder freizuschalten. Für die Erläuterung der Elemente mit den dargestellten Bezugszeichen sei hier auf Fig. 1 verwiesen.

Im Unterschied zu Fig. 1 ist bei dem Kraftfahrzeug 10 gemäß Fig. 2 bei der Steuervorrichtung 16 allerdings vorgesehen, dass diese eine Zuordnungsvorschrift 20 bereitstellt, die hier als Funktion f(m, r) dargestellt ist, wobei die Funktion f eine Zuordnung 21 in Abhängigkeit von einer Ordnungsnummer oder einer Identität der jeweiligen Ankertransmitter 13 (A1, A2, ..., An, ..., AN) und einem aktuellen Zählerindex r des aktuell durchgeführten Messzyklus 14 als Eingabeparameter aufweist. Durch die Zuordnung wird eine Sendereihenfolge 22 der Ankertransmitter 13 für den aktuellen Messzyklus 14 (Index r) festgelegt. Die Ankertransmitter können auch für eine Abstandsmessung oder Laufzeitmessung im Inneren des Kraftfahrzeugs 10 vorgesehen sein.

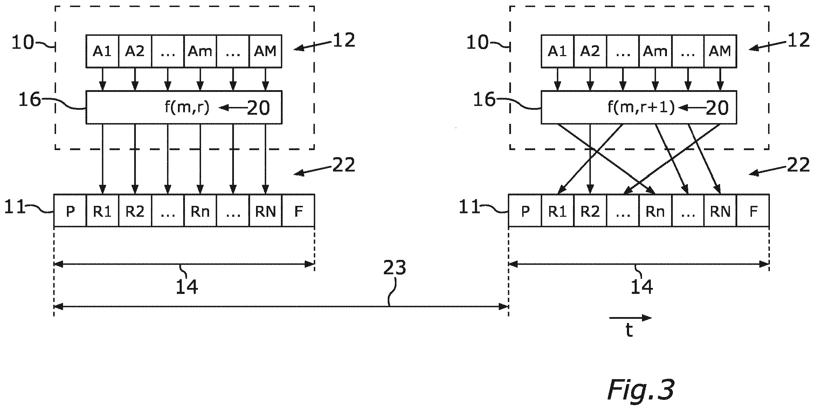

Fig. 3 veranschaulicht, wie die Sendereihenfolge 22 mittels der Zuordnungsvorschrift 20 durch die Steuervorrichtung 16 für zwei aufeinanderfolgende Messzyklen 14 mit den beispielhaften Zählerindexwerten r und r+1.

Durch die dargestellten Pfeile zwischen der Steuervorrichtung 16 und der Funkschlüsseleinheit 11 ist symbolisiert, in welcher Sendereihenfolge 22 die Ankertransmitter 13 im Messzyklus 14 ihre jeweilige Ankernachricht 17 aussenden. Natürlich senden die Ankertransmitter 13 nicht durch die Steuervorrichtung 16 hindurch, sondern die Darstellung ist symbolisch zu verstehen dahingehend, dass die Zuordnungsvorschrift 20 der Steuervorrichtung 16 die Sendereihenfolge 22 durch entsprechendes Ansteuern der Ankertransmitter 13 festlegt.

Über der Zeit t können sich somit zwei aufeinanderfolgende Messzyklen 14 mit den beispielhaften Indizes r und r+1 ergeben, wobei deren Sendereihenfolge 22 sich unterscheiden kann. Ein zeitlicher Abstand zwischen den aufeinanderfolgenden Messzyklen wird auch als Messintervall 23 bezeichnet.

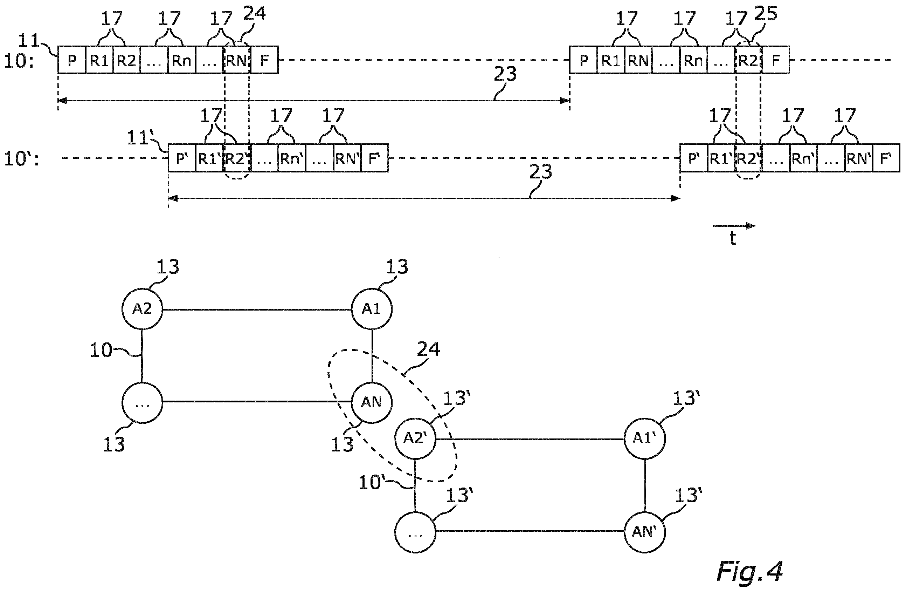

Fig. 4 veranschaulicht, wie durch die Zuordnungsvorschrift 20 auch eine Funkkollision oder Interferenz zwischen zwei Kraftfahrzeugen 10, 10' vermieden werden kann, sodass zwei kollidierende Ankernachrichten nur für einen Messzyklus vorkommen können.

Dargestellt ist, wie bei dem Kraftfahrzeug 10 dessen Ankertransmitter 13 (bezeichnet als A1, A2, ..., An) an Ecken des Kraftfahrzeugs 10 bereitgestellt oder angeordnet sein können. Bei dem Kraftfahrzeug 10' können dessen Ankertransmitter 13' ebenfalls an den Ecken bereitgestellt sein. In der dargestellten Parksituation kann sich eine Interferenz 24 zwischen dem Ankertransmitter An des Kraftfahrzeugs 10 und dem Ankertransmitter A2' des Kraftfahrzeugs 10' ergeben, wenn diese gleichzeitig sendet.

Über der Parksituation ist über der Zeit t für das Kraftfahrzeug 10 und das Kraftfahrzeug 10' jeweils veranschaulicht, welche Ankernachrichten 17 die jeweils zu dem Kraftfahrzeug 10, 10' gehörende Funkschlüsseleinheit 11, 11' empfängt. Die Interferenz 24 ergibt sich während des ersten gezeigten Messzyklus für die Ankernachrichten 17 mit den Bezeichnungen Rn für das Kraftfahrzeug 10 und R2' für das Kraftfahrzeug 10'. Geht man nun davon aus, dass das Messintervall 23 für beide Kraftfahrzeuge 10, 10' gleich ist, so würden die beiden Ankertransmitter An des Kraftfahrzeugs 10 und A2' des Kraftfahrzeugs 10' auch im nächsten Messzyklus wieder die Interferenz 24 erzeugen, weil sie zum selben Zeitschlitz senden würden. Dies wird aber bei dem Kraftfahrzeug 10 verhindert, indem die Sendereihenfolge verändert wird und, wie beispielhaft in Fig. 4 veranschaulicht, anstelle des Ankertransmitters AN für den fraglichen Zeitschlitz der Ankertransmitter A2 seine Ankernachricht R2 sendet, sodass sich eine verhinderte Interferenz 25 ergibt, da nun räumlich beabstandete Ankertransmitter gleichzeitig senden.

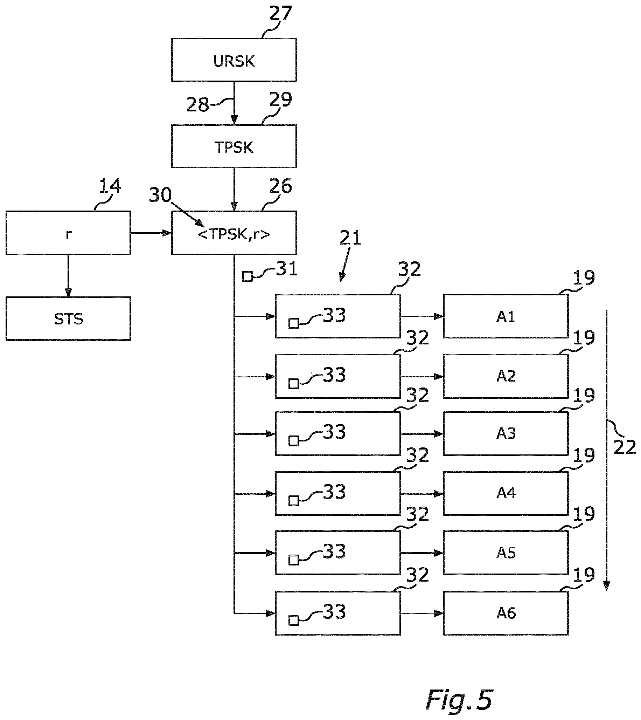

Fig. 5 veranschaulicht in einem Diagramm, wie mittels einer kryptographischen Funktion 26 auf der Grundlage eines Sitzungsschlüssels 27 für eine Funkkommunikation die Sendereihenfolge 22 über der Zeit t für einen gegebenen Messzyklus 14 mit dem Zählerindex r festgelegt werden kann. Als Sitzungsschlüssel 27 kann beispielsweise der URSK (UWB Ranging Session Key) verwendet werden, aus welchem mittels einer vorbestimmten Funktion 28 ein Positionsschlüssel 29 ermittelt werden kann, der hier beispielhaft als TPSK (Transmit Position Session Key) bezeichnet ist. Mittels der kryptographischen Funktion 26 kann also auf der Grundlage der Eingangsparameter 30 bestehend aus der Ausgabe der Funktion 28 und dem Zählerindex r des aktuellen Messzyklus 14 zu dem ersten Zeitschlitz 19 die Zuordnung 21 erfolgen. Als kryptographische Funktion 26 kann beispielsweise ein Hashwert oder eine Prüfsumme aus den Eingangsparametern 30 berechnet werden. Die Zuordnung 21 kann dann ausgehend von dem ermittelten Hashwert 31 beispielsweise eine Offsetfunktion 32 vorsehen, die dem Hashwert 31 noch einen Offsetwert hinzufügt, wobei jeder der möglichen Offsetwerte 33 für den Messzyklus 14 nur einmal vergeben wird, sodass innerhalb des Messzyklus 14 für die Sendereihenfolge 22 jeweils ein Ankertransmitter A1, A2, A3, A4, A5, A6 genau einem noch freien und nicht verwendeten Zeitschlitz 19 zugeordnet wird. Das Beispiel von Fig. 5 nimmt an, dass sechs Ankertransmitter auf sechs Zeitschlitze 19 aufgeteilt werden sollen. Für die Ermittlung der Offsetwerte 33 kann beispielsweise eine sogenannte Shuffle-Funktion verwendet werden, wie sie z.B. unter dem Namen Fisher-Yates-Shuffle bekannt ist (https://en.wikipedia.org/wiki/Fisher%E2%80%93Yates_shuffle).

Eine solche Shuffle-Funktion kann als Eingangswert den Hashwert 31 und die Anzahl der Zeitschlitze 19 empfangen und erzeugt die benötigten Offsetwerte 33.

Aus dem aktuellen Zählerindex r des Messzyklus 14 kann auch eine Trainingssequenz STS abgeleitet werden.

Bei dem beispielhaft dargestellten Kraftfahrzeug 10 ist somit eine UWB-basierte Laufzeitmessung zur Bestimmung eines Abstands zwischen einer Funkschlüsseleinheit 11 einerseits und jeweils einem der Ankertransmitter 13 andererseits ermöglicht (ToF - Time of Flight-Messung). Hierbei kann das DS-TWR-Verfahren mit Pollingnachricht P, Ankernachricht R und Finalnachricht F verwendet werden. Die Nutzung mehrerer Ankertransmitter 13 ist dabei ermöglicht. Die Laufzeitmessung kann durch mehrere Messzyklen 14 periodisch wiederholt werden, um hierdurch eine genauere Lokalisierung und/oder eine Positionsverfolgung über der Zeit zu ermöglichen.

Hierbei werden durch die Steuervorrichtung 16 die folgenden Lösungen angeboten:
M1: Die Zuordnung (Mapping) der Ankertransmitter zu den Zeitschlitzen geschieht dynamisch und ändert sich bei jedem Messzyklus.
M2: Das Mapping geschieht nach einem vorher festgelegten Muster (zum Beispiel Permutation).
M3: Das Mapping kann kryptographisch gesichert und nur den teilnehmenden Messelementen bekannt sein.
M4: Das Mapping ist für den Initiator, das heißt die Funkschlüsseleinheit, transparent und nur für die Sendeanlage bekannt.
M5: Das Mapping wird von der Kryptologie für die STS abgeleitet (siehe Fig. 5).
M6: Das Mapping hängt von der Indizierung r des aktuellen Messzyklus oder Ranging-Cycles ab.
M7: Das Mapping hängt von der Zeit t ab (Zeitschlitze).
M8: Die Anzahl der Zeitschlitze ist gleich, kleiner oder größer als die Anzahl der Ankertransmitter (eine beliebige Anzahl von Ankertransmittern wird auf eine beliebige Anzahl von Zeitschlitzen abgebildet).
M9: Zeitschlitze können mehrfach belegt werden (falls M > N).
M10: Ankertransmitter können mehrere Zeitschlitze innerhalb eines Messzyklus nutzen (Erhöhung der Verfügbarkeit/Genauigkeit) .
M11: Nicht jedem Ankertransmitter muss pro Messzyklus ein Zeitschlitz zugewiesen (falls M > N).
M12: Zur Erhöhung der Sicherheit akzeptiert die Steuervorrichtung einen Messwert einer Laufzeit für einen Ankertransmitter erst nach k erfolgreichen Plausibilisierungen mittels eines Plausibilisierungskriteriums.

Die Möglichkeit eines physikalischen Angriffs auf die Sendeanlage wird hierdurch erheblich reduziert, da für einen Messzyklus einem Angreifer unbekannt, welcher Ankertransmitter als nächstes aussenden wird.

Eine Identifikation des nächsten sendenden Ankertransmitters ist durch das hier beschriebene Verfahren maßgeblich erschwert. Hierzu ist grundsätzlich festzustellen, bei einer Sendeanlage mit M verbauten Ankertransmittern die Wahrscheinlichkeit 1/N beträgt, dass ein Angreifer den korrekten Zeitschlitz erraten kann, in welchem ein vorher festgelegter Ankertransmitter senden wird, wenn er kein besonderes Wissen über die Sendereihenfolge 22 hat. Mit anderen Worten ist diese Wahrscheinlichkeit gleich verteilt, weshalb die hier beschriebene Zuordnungsvorschrift 20 auch als Whitening (Weißen oder Gleichverteilen) bezeichnet werden kann. Bei entsprechender Wahl der Zuordnungsvorschrift 20, das heißt eines entsprechenden Mapping, für die Ankertransmitter auf die Zeitschlitze kann erwirkt werden, dass eine erfolgreiche, zufällige, K-malige Identifikation eines Ankers infolge lediglich mit der Wahrscheinlichkeit (1/N)^{k} auftritt.

Hierbei kann aber ein solcher Angriff durch Festlegung einer ausreichend hohen Anzahl an erforderlichen positiven Validierungstests ausgeschlossen werden, wozu mehrere Messzyklen für einen einzelnen Schließvorgang vorgesehen werden können und die positive Validierung durch ein Plausibilitätskriterium festgelegt wird und auch die entsprechende Mindestanzahl an positiven Validierungen durch das Plausibilitätskriterium gegeben ist. Somit sinkt die Erfolgswahrscheinlichkeit eines Angriffs exponentiell mit der Anzahl der durch das Plausibilitätskriterium definierten Anzahl an positiven Validierungen.

Wie in Fig. 4 veranschaulicht, kann es bei der Durchführung von Messzyklen nach einem statistischen Muster mit mehreren Kraftfahrzeugen zu einer Interferenz 24 kommen, die durch gleichzeitiges Aussenden einer jeweiligen Ankernachricht zwei nicht miteinander koordinierter Ankertransmitter 13, 13' hervorgerufen werden kann, wenn zwei Ankertransmitter das gleiche Messintervall 23 benutzen und sich die Ankernachrichten teilweise zeitlich überschneiden oder es eine Interferenz zwischen einzelnen Ankernachrichten gibt.

Durch das Verändern der Sendereihenfolge 22 in aufeinanderfolgenden Messzyklen wird die Zuordnung von Zeitschlitzen zu Ankernachrichten dynamisch verändert, weshalb sich kein statischer Zustand einstellen kann, bei dem für jeden Messzyklus zwei interferierende Ankertransmitter 13, 13' stets ihre Ankernachrichten zugleich aussenden. Somit kann also für eine Funkschlüsseleinheit 11 der störungsfreie Empfang von Ankernachrichten für mehrere Messzyklen bis auf einen vorgegeben oder garantiert werden.

Da die Anzahl N der verbauten Ankertransmitter 13 je nach Fahrzeugtyp des Kraftfahrzeugs 10 und dessen Ausstattung unterscheiden kann, ist es für eine Koexistenz unterschiedlicher Sendeanlagen notwendig, dass deren Sendeprotokoll einheitlich ausgestaltet ist. Durch die vorgeschlagene Zuordnungsvorschrift 20 kann eine einheitliche Länge der Ankernachrichten erreicht werden. Hierfür wird eine durch das Sendeprotokoll vorgeschriebene Anzahl N von Zeitschlitzen 9 bevorzugt fest definiert. Für Kraftfahrzeuge mit weniger als N Ankertransmittern kann durch die Zuordnungsvorschrift eine Erhöhung der Messgenauigkeit durch mehrfache Besetzung von Zeitschlitzes mit Ankertransmittern erreicht werden. Im Gegensatz dazu kann bei einem Kraftfahrzeug mit mehr als N Ankertransmittern durch das vorgeschlagene Verfahren eine zeitliche Kompression erreicht werden, indem beispielsweise nicht in jedem Messzyklus jeder Ankertransmitter senden muss. Hierbei kann sichergestellt werden, dass alle überzähligen Ankertransmitter nach mehreren Messzyklen sporadisch oder zyklisch ihre Ankernachricht aussenden. Weiterhin ist durch das vorgeschlagene Verfahren eine Priorisierung von wichtigen Ankern möglich, für die häufiger oder mit größerer Messgenauigkeit die Abstandsmessung erfolgen soll. Hierzu kann die Zuordnungsvorschrift entsprechend ausgestaltet werden.

Insgesamt zeigt das Beispiel, wie durch die Erfindung ein Frame-Slot-Whitening in Messzyklen einer Sendeanlage eines Funkschlüsselsystems erreicht werden kann.

### Bezugszeichenliste

- 10: Kraftfahrzeug
- 10': Kraftfahrzeug
- 11: Funkschlüsseleinheit
- 11': Funkschlüsseleinheit
- 12: Sendeanlage
- 13: Ankertransmitter
- 13': Ankertransmitter
- 14: Messzyklus
- 15: Pollingnachricht
- 16: Steuervorrichtung
- 17: Ankernachricht
- 18: Finalnachricht
- 19: Zeitschlitz
- 20: Zuordnungsvorschrift
- 21: Zuordnung
- 22: Sendereihenfolge
- 23: Messintervall
- 24: Interferenz
- 25: Interferenzfreie Kommunikation
- 26: Kryptographische Funktion
- 27: Sitzungsschlüssel
- 28: Funktion
- 29: Positionsschlüssel
- 30: Eingangsparameter
- 31: Hashwert
- 32: Offsetfunktion
- 33: Offset

- r: Index
- S: Schließvorgang

## Patentansprüche

1. Verfahren zum Betreiben einer Sendeanlage (12) eines Funkschlüsselsystems eines Kraftfahrzeugs (10), wobei eine Steuervorrichtung (16) der Sendeanlage (12) vorsieht, dass für einen jeweiligen Schließvorgang (S) in zumindest einem Messzyklus (14) jeweils in Reaktion auf eine Pollingnachricht (15) in mehreren aufeinander folgenden Zeitschlitzen (19) jeweils einer von mehreren Ankertransmittern (13) der Sendeanlage (12) eine Ankernachricht (17) aussendet und der Messzyklus (14) durch Empfangen einer Finalnachricht (18), welche von einer Funkschlüsseleinheit (11) gemessene Empfangszeiten der Ankernachrichten (17) signalisiert, beendet wird,
**dadurch gekennzeichnet, dass** zum Ermitteln einer Sendereihenfolge (22) der Ankertransmitter (13) mittels einer Zuordnungsvorschrift (20) eine Zuordnung (21) der Ankertransmitter (13) zu den Zeitschlitzen (19) durchgeführt wird, wobei die Zuordnungsvorschrift (20) vorsieht, dass die Zuordnung (21) zeitlich veränderlich erfolgt.

2. Verfahren nach Anspruch 1, wobei die Zuordnungsvorschrift (21) vorsieht, dass die Zuordnung (21) für zumindest einige aufeinander folgende Messzyklen (14) gemäß einem vorbestimmten Permutationsmuster erfolgt.

3. Verfahren nach einem der vorhergehenden Ansprüche, wobei die Zuordnungsvorschrift (20) vorsieht, dass die Zuordnung (21) für zumindest einige aufeinander folgende Messzyklen (14) mittels einer kryptographischen Funktion (26) pseudo-zufällig erfolgt.

4. Verfahren nach einem der vorhergehenden Ansprüche, wobei die jeweils gewählte Zuordnung (21) vor der Funkschlüsseleinheit (11) geheim gehalten wird und die Steuervorrichtung (16) die durch die Finalnachricht (18) signalisierten Empfangszeiten jeweils dem zugehörigen Ankertransmitter (13) zuordnet.

5. Verfahren nach einem der vorhergehenden Ansprüche, wobei für den Schließvorgang (S) eine vorbestimmte Trainingssequenz und/oder eines Sitzungsschlüssels (27) zum Absichern einer Funkkommunikation mit der Funkschlüsseleinheit (11) ausgetauscht wird und die Zuordnung in Abhängigkeit von der Trainingssequenz und/oder dem Sitzungsschlüssel (27) mittels einer Funktion abgeleitet wird.

6. Verfahren nach einem der vorhergehenden Ansprüche, wobei für den Schließvorgang (S) mehrere Messzyklen (14) nacheinander durchgeführt werden und die Messzyklen (14) durch einen Zählerindex (r) voneinander unterschieden werden und die für den jeweiligen Messzyklus (14) durchgeführte Zuordnung (21) in Abhängigkeit von dem jeweils aktuellen Zählerindex (r) festgelegt wird.

7. Verfahren nach einem der vorhergehenden Ansprüche, wobei die für zumindest einen Messzyklus (14) oder zumindest einige Messzyklen (14) durchgeführte Zuordnung (21) in Abhängigkeit von einem Zeitsignal einer Zeitgebereinheit oder einem Zählerstand festgelegt wird.

8. Verfahren nach einem der vorhergehenden Ansprüche, wobei in zumindest einem oder zumindest einigen Messzyklen (14) eine Anzahl der Zeitschlitze (19) größer oder gleich oder kleiner als eine Anzahl (M) der Ankertransmitter (13) ist.

9. Verfahren nach einem der vorhergehenden Ansprüche, wobei die Zuordnungsvorschrift (20) für zumindest einen Zeitschlitz (19) vorsieht, dass zwei Ankertransmitter (13) innerhalb des Zeitschlitzes (19) ihre jeweilige Ankernachricht (17) aussenden.

10. Verfahren nach einem der vorhergehenden Ansprüche, wobei die Zuordnungsvorschrift (20) für zumindest einen Messzyklus (14) vorsieht, dass zumindest ein Ankertransmitter (13) seine jeweilige Ankernachricht (17) in zumindest zwei unterschiedlichen Zeitschlitzen (19) des Messzyklus (14) aussendet.

11. Verfahren nach einem der vorhergehenden Ansprüche, wobei die Zuordnungsvorschrift (20) für zumindest einen Messzyklus (14) vorsieht, dass nur einige der Ankertransmitter (13) ihre jeweilige Ankernachricht (17) aussenden.

12. Verfahren nach einem der vorhergehenden Ansprüche, wobei für zumindest einen Schließvorgang (S) vorgesehen ist, dass mehrere Messzyklen (14) durchgeführt werden und aus der Finalnachricht (18) jedes Messzyklus (14) ein jeweiliger Abstandswert eines Abstands der Funkschlüsseleinheit (11) zur jedem der Ankertransmitter (13) ermittelt wird und ein Freigabesignal für den Schließvorgang (S) nur erzeugt wird, wenn die Abstandswerte der mehreren Messzyklen (14) ein vorbestimmtes Plausibilitätskriterium erfüllen.

13. Steuervorrichtung (16) für eine fahrzeugseitige Sendeanlage (12) eines Funkschlüsselsystems für ein Kraftfahrzeug (10), wobei die Steuervorrichtung (16) eine Recheneinrichtung aufweist, die dazu eingerichtet ist, ein Verfahren nach einem der vorhergehenden Ansprüche durchzuführen.

14. Kraftfahrzeug (10) mit einer Steuervorrichtung (16) nach Anspruch 13 und mit einer Sendeanlage (12) eines Funkschlüsselsystems, wobei mehrere Ankertransmitter (13) der Sendeanlage (12) mit der Steuervorrichtung (16) gekoppelt sind.

## Claims

1. Method for operating a transmitter (12) of a radio key system of a motor vehicle (10), wherein a control device (16) of the transmitter (12) provides that for a respective closing operation (S) in at least one measuring cycle (14) in each case in response to a polling message (15) in several subsequent time slots (19) in each case one of several anchor transmitters (13) of the transmitter (12) emits an anchor message (17) and the measuring cycle (14) is terminated by receiving a final message (18), which signals receiving times of the anchor messages (17) measured by a radio key unit (11), **characterized in that** for determining a transmission order (22) of the anchor transmitters (13) by an assignment rule (20) an assignment (21) of the anchor transmitters (13) to the time slots (19) is performed, wherein the assignment rule (20) provides that the assignment (21) is effected in a time-variable manner.

2. Method according to claim 1, wherein the assignment rule provides that the assignment (21) for at least several subsequent measuring cycles (14) is effected according to a predetermined permutation pattern.

3. Method according to any one of the preceding claims, wherein the assignment rule (20) provides that the assignment (21) for at least several subsequent measuring cycles (14) is effected by a cryptographic function (26) in a pseudorandom manner.

4. Method according to any one of the preceding claims, wherein the assignment (21) chosen in each case is kept secret from the radio key unit (11) and the control device (16) assigns the receiving times signaled by the final message (18) to the associated anchor transmitter (13) in each case.

5. Method according to any one of the preceding claims, wherein for the closing operation (S) a predetermined training sequence and/or a session key (27) for securing a radio communication with the radio key unit (11) is exchanged and the assignment is derived in dependence on the training sequence and/or the session key (27) by a function.

6. Method according to any one of the preceding claims, wherein for the closing operation (S) several measuring cycles (14) are performed one after the other and the measuring cycles (14) are distinguished from each other by a counter index (r) and the assignment (21) performed for the respective measuring cycle (14) is set in dependence on the current counter index (r) in each case.

7. Method according to any one of the preceding claims, wherein the assignment (21) performed for at least one measuring cycle (14) or at least several measuring cycles (14) is set in dependence on a time signal of a timer unit or a counter reading.

8. Method according to any one of the preceding claims, wherein in at least one or at least several measuring cycles (14) a number of time slots (19) is equal to or larger than or smaller than a number (M) of the anchor transmitters (13).

9. Method according to any one of the preceding claims, wherein the assignment rule (20) for at least one time slot (19) provides that two anchor transmitters (13) within the time slot (19) emit their respective anchor message (17).

10. Method according to any one of the preceding claims, wherein the assignment rule (20) for at least one measuring cycle (14) provides that at least one anchor transmitter (13) emits its respective anchor message (17) in at least two different time slots (19) of the measuring cycle (14).

11. Method according to any one of the preceding claims, wherein the assignment rule (20) for at least one measuring cycle (14) provides that only several of the anchor transmitters (13) emit their respective anchor message (17).

12. Method according to any one of the preceding claims, wherein for at least one closing operation (S) it is provided that several measuring cycles (14) are performed and from the final message (18) of each measuring cycle (14) a respective distance value of a distance of the radio key unit (11) from each of the anchor transmitters (13) is determined and a release signal for the closing operation (S) is only generated, if the distance values of the several measuring cycles (14) fulfill a predetermined plausibility criterion.

13. Control device (16) for a vehicle-mounted transmitter (12) of a radio key system for a motor vehicle (10), wherein the control device (16) comprises a computing device, which is configured to perform a method according to any one of the preceding claims.

14. Motor vehicle (10) comprising a control device (16) according to claim 13 and comprising a transmitter (12) of a radio key system, wherein several anchor transmitters (13) of the transmitter (12) are coupled to the control device (16).

## Revendications

1. Procédé pour faire fonctionner un émetteur (12) d'un système de clé à radiocommande d'un véhicule automobile (10), dans lequel un dispositif de commande (16) de l'émetteur (12) prévoit que, pour un processus de fermeture (S) respectif pendant au moins un cycle de mesure (14), dans chaque cas en réponse à un message d'interrogation (15) sur plusieurs créneaux temporels (19) consécutifs, un émetteur-récepteur d'ancre parmi une pluralité d'émetteurs-récepteurs d'ancre (13) de l'émetteur (12) envoie un message d'ancre et le cycle de mesure (14) s'achève par la réception d'un message final (18) qui signale des temps de réception mesurés par une unité de clé à radiocommande (11), **caractérisé en ce que** pour déterminer une séquence d'émission (22) de l'émetteur-récepteur d'ancre (13) au moyen d'une instruction d'affectation (20), une affectation (21) des émetteurs-récepteurs d'ancre (13) aux créneaux temporels (19) est effectuée, dans lequel l'instruction d'affectation (20) prévoit que l'affectation (21) est effectuée de manière variable dans le temps.

2. Procédé selon la revendication 1, dans lequel l'instruction d'affectation (21) prévoit que l'affectation (21) est effectuée pendant au moins plusieurs cycles de mesure (14) consécutifs suivant un modèle de permutation prédéterminé.

3. Procédé selon l'une des revendications précédentes, dans lequel l'instruction d'affectation (20) prévoit que l'affectation (21) est effectuée de manière pseudo-aléatoire pendant au moins plusieurs cycles de mesure (14) consécutifs au moyen d'une fonction cryptographique (26).

4. Procédé selon l'une des revendications précédentes, dans lequel l'affectation (21) respective choisie est tenue secrète de l'unité de clé à radiocommande (11) et le dispositif de commande (16) affecte les temps de réception respectifs signalés par le message final (18) à l'émetteur-récepteur d'ancre (13) associé.

5. Procédé selon l'une des revendications précédentes, dans lequel pour le processus de fermeture (S), une séquence d'apprentissage prédéterminée et/ou une clé de session (27) est échangée afin de sécuriser une communication radio avec l'unité de clé à radiocommande (11) et l'affectation est déduite au moyen d'une fonction dépendant de la séquence de formation d'apprentissage et/ou de la clé de session (27).

6. Procédé selon l'une des revendications précédentes, dans lequel pour le processus de fermeture (S), plusieurs cycles de mesure (14) sont exécutés les uns à la suite des autres et les cycles de mesure (14) sont différenciés les uns des autres par un indice de compteur (r) et l'affectation (21) réalisée pour le cycle de mesure (14) respectif est déterminée en fonction de l'indice de compteur (r) actuel respectif.

7. Procédé selon l'une des revendications précédentes, dans lequel l'affectation (21) effectuée pour au moins un cycle de mesure (14) ou pour au moins plusieurs cycles de mesure (14) est déterminée en fonction d'un signal de temps d'une unité de temporisation ou d'un état de compteur.

8. Procédé selon l'une des revendications précédentes, dans lequel pendant au moins un ou au moins plusieurs cycles de mesure (14), un nombre des créneaux temporels (19) est supérieur ou égal ou inférieur à un nombre (M) des émetteurs-récepteurs d'ancre (13).

9. Procédé selon l'une des revendications précédentes, dans lequel l'instruction d'affectation (20) prévoit, pour au moins un créneau temporel (19), que deux émetteurs-récepteurs d'ancre (13) émettent leur message d'ancre (17) respectif dans le créneau temporel (19).

10. Procédé selon l'une des revendications précédentes, dans lequel l'instruction d'affectation (20) prévoit, pour au moins un cycle de mesure (14), qu'au moins un émetteur-récepteur d'ancre (13) envoie son message d'ancre (17) respectif dans au moins deux créneaux temporels (19) différents du cycle de mesure (14).

11. Procédé selon l'une des revendications précédentes, dans lequel l'instruction d'affectation (20) prévoit, pour au moins un cycle de mesure (14), que uniquement plusieurs émetteurs-récepteurs d'ancre (13) émettent leur message d'ancre (17) respectif.

12. Procédé selon l'une des revendications précédentes, dans lequel pour au moins un processus de fermeture (S), il est prévu d'exécuter plusieurs cycles de mesure (14) et de déterminer, à partir du message final (18) de chaque cycle de mesure (14), une valeur de distance respective d'une distance entre l'unité de clé à radiocommande (11) et chacun des émetteurs-récepteurs d'ancre (13), et de générer un signal d'autorisation pour le processus de fermeture (S) uniquement lorsque les valeurs de distance de la pluralité de cycles de mesure (14) satisfont à un critère de plausibilité prédéterminé.

13. Dispositif de commande (16) pour un émetteur (12) côté véhicule d'un système de clé à radiocommande pour un véhicule automobile (10), dans lequel le dispositif de commande (16) comporte un dispositif de calcul qui est configuré pour mettre en œuvre un procédé selon l'une des revendications précédentes.

14. Véhicule automobile (10) ayant un dispositif de commande (16) selon la revendication 13 et un émetteur (12) d'un système de clé à radiocommande, dans lequel plusieurs émetteurs-récepteurs d'ancre (13) de l'émetteur (12) sont couplés au dispositif de commande (16).
